# EUROPEAN PATENT APPLICATION

(11) **EP 4 144 891 A1**
(43) Date of publication of application: **08.03.2023**
(21) Application number: 21797791.7
(22) Date of filing: 23.03.2021
(51) Int. Cl.: C25B 9/00, C25B 15/02

(54) **ELECTROLYSIS SYSTEM AND ELECTROLYSIS METHOD**

(30) Priority: 01.05.2020 JP 2020080918
(71) Applicant: IHI Corporation, Tokyo 135-8710 (JP)
(72) Inventor: OKUNO, Shinya, Tokyo 135-8710 (JP); MIZUKAMI, Noriki, Tokyo 135-8710 (JP); KAMATA, Hiroyuki, Tokyo 135-8710 (JP)
(74) Representative: TBK
(86) International application number: PCT/JP2021/011833
(87) International publication number: WO 2021/220667

(57) **Abstract**

An electrolysis system (1) includes at least one H₂O electrolysis apparatus (10) that electrolyzes water to produce hydrogen; and at least one CO₂ electrolysis apparatus (20) that electrolyzes carbon dioxide to produce carbon monoxide. The electrolysis system (1) includes a co-electrolysis apparatus (30) that co-electrolyzes water and carbon dioxide to produce less hydrogen per unit time than produced by the at least one H₂O electrolysis apparatus (10) and less carbon monoxide per unit time than produced by the at least one CO₂ electrolysis apparatus (20).

## Description

### TECHNICAL FIELD

The present disclosure relates to an electrolysis system and an electrolysis method.

### BACKGROUND ART

Installation of power generation systems using renewable energy has been recently promoted to control carbon dioxide emissions. However, in power generation using renewable energy, output tends to fluctuate depending on natural conditions, such as weather, and when output is large, surplus electricity may be generated. Moreover, surplus electricity may be generated when the installation of such power generation systems becomes excessive and power generation exceeds the capacity of transmission facilities.

It has thus been proposed that the above-described surplus electricity be converted into an energy carrier such as hydrocarbons, the energy carrier be stored and transported, and the surplus electricity be supplied to a user at a necessary timing. Hydrocarbons are produced from synthesis gas containing hydrogen and carbon monoxide, and the synthesis gas can be obtained by electrolysis of water and carbon dioxide using surplus electricity.

As a system for producing hydrocarbons by electrolysis, an electric power storage and supply system described in Patent Literature 1 is known. The electric power storage and supply system includes a reversible SOC for performing H₂O electrolysis, CO₂ electrolysis, or H₂O+CO₂ co-electrolysis, and a fuel manufacturing apparatus for synthesizing hydrocarbons using cathode off gas of the reversible SOC.

### CITATION LIST

### PATENT LITERATURE

Patent Literature 1: Japanese Unexamined Patent Application Publication No. 2018-190650

### SUMMARY OF THE INVENTION

### TECHNICAL PROBLEM

In the case of the co-electrolysis as described in Patent Literature 1, hydrogen is produced by electrolysis of water, carbon monoxide is produced by electrolysis of carbon dioxide, and thus synthesis gas for producing hydrocarbons can be obtained using a single electrolysis apparatus. However, products that can be produced from the synthesis gas as a raw material can include not only hydrocarbons as energy carriers but also valuable substances such as alcohols and ether. However, the composition of hydrogen and carbon monoxide in the synthesis gas should be adjusted to an optimum composition according to the kind of product. When water and carbon dioxide are co-electrolyzed, the ratio of production amounts of hydrogen and carbon monoxide may not agree with the ratio of supplied flows of water and carbon dioxide according to theory. Since the optimum electrolysis voltage of water alone and the optimum electrolysis voltage of carbon dioxide alone are different, the optimum electrolysis voltage of the co-electrolysis may vary according to the supply flow of water, the supply flow of carbon dioxide, and their ratios. For these reasons, when water and carbon dioxide are co-electrolyzed, it is necessary to set the operating conditions of the electrolysis apparatus in consideration of multiple factors in comparison with when water alone or carbon dioxide alone is electrolyzed. Therefore, the operation of the electrolysis apparatus is complicated, and it is difficult to easily produce synthesis gas having a desired composition.

An object of the present disclosure is to provide an electrolysis system and an electrolysis method capable of easily producing synthesis gas having a desired composition.

### SOLUTION TO PROBLEM

An electrolysis system according to an aspect of the present disclosure includes at least one H₂O electrolysis apparatus that electrolyzes water to produce hydrogen. The electrolysis system includes at least one CO₂ electrolysis apparatus that electrolyzes carbon dioxide to produce carbon monoxide. The electrolysis system includes a co-electrolysis apparatus that co-electrolyzes water and carbon dioxide to produce less hydrogen per unit time than produced by the at least one H₂O electrolysis apparatus and less carbon monoxide per unit time than produced by the at least one CO₂ electrolysis apparatus.

The at least one H₂O electrolysis apparatus may be arranged in parallel with the at least one CO₂ electrolysis apparatus, the at least one H₂O electrolysis apparatus may be arranged in parallel with the co-electrolysis apparatus, and the at least one CO₂ electrolysis apparatus may be arranged in parallel with the co-electrolysis apparatus. The at least one H₂O electrolysis apparatus may include a plurality of H₂O electrolysis apparatuses arranged in parallel, and an amount of hydrogen per unit time produced by each of the plurality of H₂O electrolysis apparatuses may be greater than an amount of hydrogen per unit time produced by the co-electrolysis apparatus. The at least one CO₂ electrolysis apparatus may include a plurality of CO₂ electrolysis apparatuses arranged in parallel, and an amount of carbon monoxide per unit time produced by each of the plurality of CO₂ electrolysis apparatuses may be greater than an amount of carbon monoxide per unit time produced by the co-electrolysis apparatus. The at least one H₂O electrolysis apparatus, the at least one CO₂ electrolysis apparatus, and the co-electrolysis apparatus each may include a solid oxide electrolysis cell.

An electrolysis method according to another aspect of the present disclosure includes an H₂O electrolysis step of electrolyzing water to produce hydrogen. The electrolysis method includes a CO₂ electrolysis step of electrolyzing carbon dioxide to produce carbon monoxide. The electrolysis method includes a co-electrolysis step of co-electrolyzing water and carbon dioxide to produce less hydrogen per unit time than produced in the H₂O electrolysis step and less carbon monoxide per unit time than produced in the CO₂ electrolysis step.

### ADVANTAGEOUS EFFECTS OF INVENTION

The present disclosure makes it possible to provide an electrolysis system and an electrolysis method capable of easily producing synthesis gas having a desired composition.

### BRIEF DESCRIPTION OF DRAWINGS

[FIG. 1] FIG. 1 is a schematic diagram illustrating an example of an electrolysis system according to some embodiments.
[FIG. 2] FIG. 2 is a schematic diagram illustrating an example of an SOFC (solid oxide electrolysis cell) according to some embodiments.

### DESCRIPTION OF EMBODIMENTS

Some exemplary embodiments are described below with reference to the drawings. Note that dimensional ratios in the drawings are exaggerated for convenience of explanation and may differ from the actual ratios.

### [Electrolysis system]

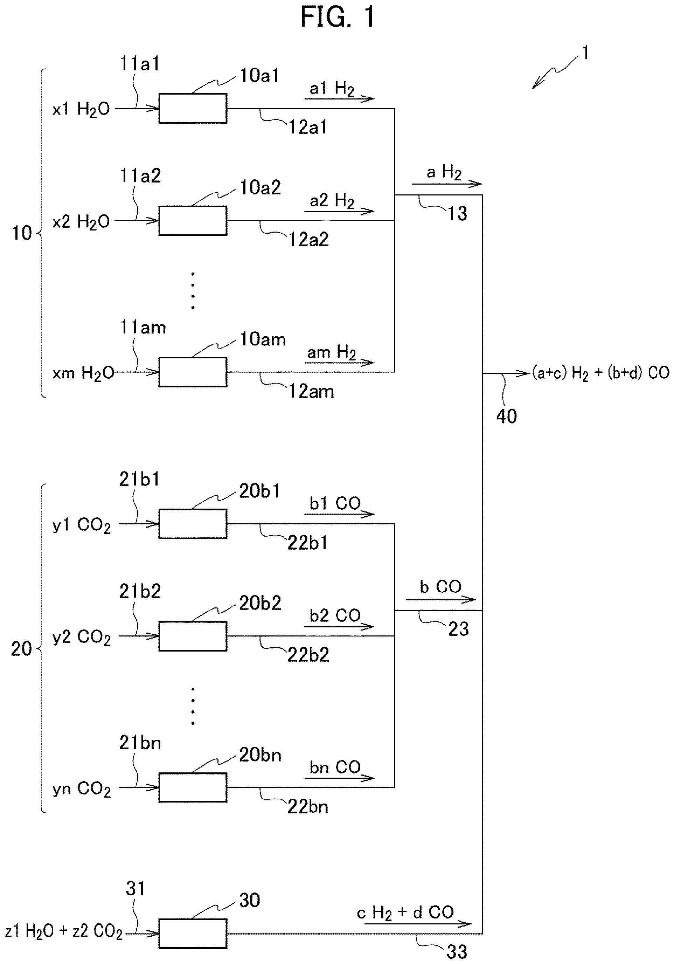

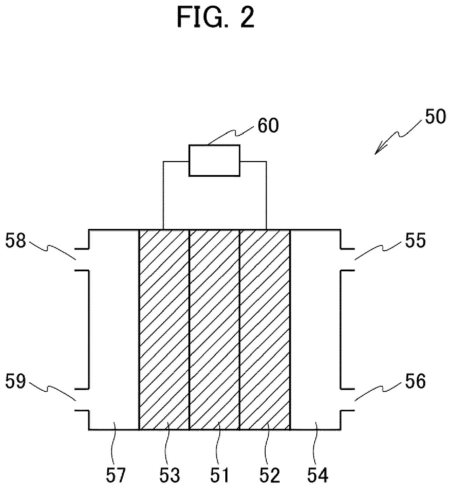

An electrolysis system according to a present embodiment is described with reference to FIGS. 1 and 2. As illustrated in FIG. 1, an electrolysis system 1 includes at least one H₂O electrolysis apparatus 10, at least one CO₂ electrolysis apparatus 20, and a co-electrolysis apparatus 30. The H₂O electrolysis apparatus 10 electrolyzes water to produce hydrogen. The CO₂ electrolysis apparatus 20 electrolyzes carbon dioxide to produce carbon monoxide. The co-electrolysis apparatus 30 co-electrolyzes water and carbon dioxide to produce hydrogen and carbon monoxide.

The at least one H₂O electrolysis apparatus 10 is arranged in parallel with the at least one CO₂ electrolysis apparatus 20, for example. The at least one H₂O electrolysis apparatus 10 is arranged in parallel with the co-electrolysis apparatus 30, for example. The at least one CO₂ electrolysis apparatus 20 is arranged in parallel with the co-electrolysis apparatus 30, for example.

The at least one H₂O electrolysis apparatus 10 includes a plurality of H₂O electrolysis apparatuses arranged in parallel, for example. The H₂O electrolysis apparatuses include m-unit electrolysis apparatuses, for example. The H₂O electrolysis apparatuses specifically include an electrolysis apparatus 10a1, an electrolysis apparatus 10a2, ···, and an electrolysis apparatus 10am (m is a positive integer). The electrolysis apparatus 10a1 is connected to an inlet piping 11a1 and an outlet piping 12a1, electrolyzes x1 mol of water supplied from the inlet piping 11a1, and discharges a1 mol of hydrogen from the outlet piping 12a1. The electrolysis apparatus 10a2 is connected to an inlet piping 11a2 and an outlet piping 12a2, electrolyzes x2 mol of water supplied from the inlet piping 11a2, and discharges a2 mol of hydrogen from the outlet piping 12a2. The electrolysis apparatus 10am is connected to an inlet piping 11am and an outlet piping 12am, electrolyzes xm mol of water supplied from the inlet piping 11am, and discharges am mol of hydrogen from the outlet piping 12 am. The outlet piping 12a1, the outlet piping 12a2, ···, and the outlet piping 12am are connected to an outlet piping 13, and hydrogen passing through the outlet piping 12a1, the outlet piping 12a2, ···, and the outlet piping 12am comes together and passes through the outlet piping 13. Thus, the at least one H₂O electrolysis apparatus 10 electrolyzes `x' mol of water, which is the sum of x1 mol to xm mol, to produce 'a' mol of hydrogen, which is the sum of a1 mol to am mol. Note that in the present specification, the number of moles indicates the number of moles supplied or discharged per unit time.

Note that the present embodiment describes an example in which H₂O electrolysis apparatuses include m-unit H₂O electrolysis apparatuses, but it is only required that the electrolysis system 1 includes at least one H₂O electrolysis apparatus 10. That is, the at least one H₂O electrolysis apparatus 10 may include only one H₂O electrolysis apparatus, or may include two or more, three or more, or four or more H₂O electrolysis apparatuses. The at least one H₂O electrolysis apparatus 10 may include H₂O electrolysis apparatuses of 50 or less, 20 or less, 10 or less, or 5 or less.

The at least one CO₂ electrolysis apparatus 20 includes a plurality of CO₂ electrolysis apparatuses arranged in parallel, for example. The CO₂ electrolysis apparatuses include, for example, n-unit electrolysis apparatuses. Specifically, the CO₂ electrolysis apparatuses include an electrolysis apparatus 20b1, an electrolysis apparatuses 20b2, ···, and an electrolysis apparatus 20bn (n is a positive integer). The electrolysis apparatus 20b1 is connected to an inlet piping 21b1 and an outlet piping 22b 1, electrolyzes y1 mol of carbon dioxide supplied from the inlet piping 21b1, and discharges b1 mol of carbon monoxide from the outlet piping 22b 1. The electrolysis apparatus 20b2 is connected to an inlet piping 21b2 and an outlet piping 22b2, electrolyzes y2 mol of carbon dioxide supplied from the inlet piping 21b2, and discharges b2 mol of carbon monoxide from the outlet piping 22b2. The electrolysis apparatus 20bn is connected to an inlet piping 21bn and an outlet piping 22bn, electrolyzes yn mol of carbon dioxide supplied from the inlet piping 21bn, and discharges bn mol of carbon monoxide from the outlet piping 22bn. The outlet piping 22b 1, the outlet piping 22b2, ··· and the outlet piping 22bn are connected to an outlet piping 23, and carbon monoxide passing through the outlet piping 22b1, the outlet piping 22b2, ··· and the outlet piping 22bn comes together and passes through the outlet piping 23. Thus, the at least one CO₂ electrolysis apparatus 20 electrolyzes `y' mol of carbon dioxide, which is the sum of y1 mol to yn mol, to produce 'b' mol of carbon monoxide, which is the sum of b1 mol to bn mol.

Note that in the present embodiment, an example in which CO₂ electrolysis apparatuses include n-unit CO₂ electrolysis apparatuses is described, but it is only required that the electrolysis system 1 includes at least one CO₂ electrolysis apparatus 20. That is, the at least one CO₂ electrolysis apparatus 20 may include only one CO₂ electrolysis apparatus, or may include two or more, three or more, or four or more CO₂ electrolysis apparatuses. The at least one CO₂ electrolysis apparatus 20 may include CO₂ electrolysis apparatuses of 50 or less, 20 or less, 10 or less, or 5 or less.

The co-electrolysis apparatus 30 is connected to an inlet piping 31 and an outlet piping 33, co-electrolyzes z1 mol of water and z2 mol of carbon dioxide supplied from the inlet piping 31, and discharges `c' mol of hydrogen and 'd' mol of carbon monoxide from the outlet piping 33.

The co-electrolysis apparatus 30 produces less hydrogen per unit time than produced by the at least one H₂O electrolysis apparatus 10. The at least one H₂O electrolysis apparatus 10 may include a plurality of H₂O electrolysis apparatuses arranged in parallel. Here, the amount of hydrogen per unit time produced by the plurality of H₂O electrolysis apparatuses may be greater than the amount of hydrogen per unit time produced by the co-electrolysis apparatus 30. The amount of hydrogen per unit time produced by each of the H₂O electrolysis apparatuses may be greater than the amount of hydrogen per unit time produced by the co-electrolysis apparatus 30.

The co-electrolysis apparatus 30 produces less carbon monoxide per unit time than produced by the at least one CO₂ electrolysis apparatus 20. The at least one CO₂ electrolysis apparatus 20 may include a plurality of CO₂ electrolysis apparatuses arranged in parallel. Here, the amount of carbon monoxide per unit time produced by the plurality of CO₂ electrolysis apparatuses 20 may be greater than the amount of carbon monoxide per unit time produced by the co-electrolysis apparatus 30. The amount of carbon monoxide per unit time produced by each of the plurality of CO₂ electrolysis apparatuses may be greater than the amount of carbon monoxide per unit time produced by the co-electrolysis apparatus 30.

Note that the present embodiment describes an example in which the co-electrolysis apparatus 30 includes one-unit co-electrolysis apparatus, and it is only required that the electrolysis system 1 includes at least one co-electrolysis apparatus 30. That is, the at least one co-electrolysis apparatus 30 may include only one co-electrolysis apparatus, or may include two or more co-electrolysis apparatuses. The number of co-electrolysis apparatuses included in the at least one co-electrolysis apparatus 30 may be less than the number of H₂O electrolysis apparatuses included in the at least one H₂O electrolysis apparatus 10. The number of co-electrolysis apparatuses included in the at least one co-electrolysis apparatus 30 may be less than the number of CO₂ electrolysis apparatuses included in the at least one CO₂ electrolysis apparatus 20. The at least one CO₂ electrolysis apparatus 20 may include, for example, 5 or less, 4 or less, or 3 or less CO₂ electrolysis apparatuses.

As described above, the at least one H₂O electrolysis apparatus 10 is connected to the outlet piping 13, the at least one CO₂ electrolysis apparatus 20 is connected to the outlet piping 23, and the co-electrolysis apparatus 30 is connected to the outlet piping 33. The outlet piping 13, the outlet piping 23, and the outlet piping 33 are connected to a mixing piping 40.

The at least one H₂O electrolysis apparatus 10 produces 'a' mol of hydrogen per unit time from `x' mol of water per unit time. The at least one CO₂ electrolysis apparatus 20 produces 'b' mol of carbon monoxide per unit time from `y' mol of carbon dioxide per unit time. The co-electrolysis apparatus 30 produces `c' mol of hydrogen per unit time and 'd' mol of carbon monoxide per unit time from z1 mol of water per unit time and z2 mol of carbon dioxide per unit time, respectively.

Thus, 'a' mol of hydrogen produced by the at least one H₂O electrolysis apparatus 10, 'b' mol of carbon monoxide produced by the at least one CO₂ electrolysis apparatus 20, and `c' mol of hydrogen and 'd' mol of carbon monoxide produced by the co-electrolysis apparatus 30 are mixed to form synthesis gas. The synthesis gas passes through the mixing piping 40. The mixing piping 40 may be connected to a buffer tank, and the produced synthesis gas may be stored in the buffer tank. The mixing piping 40 may be connected to a reactor, and the produced synthesis gas may be used as a raw material to produce valuable substances.

The reactor can produce valuable substances from a raw material including hydrogen produced by the at least one H₂O electrolysis apparatus 10 and the co-electrolysis apparatus 30 and carbon monoxide produced by the at least one CO₂ electrolysis apparatus 20 and the co-electrolysis apparatus 30. A known reactor may be used, and it is only required that the desired product can be produced from the raw material gas containing the synthesis gas.

The valuable substances are not limited as long as it is a substance that can be produced from synthesis gas as a raw material, and examples include organic substances, such as hydrocarbons, alcohols, and ether. Examples of hydrocarbons include paraffin, such as methane, ethane, propane, and butane, and olefins, such as ethylene, propylene, 1-butene, 2-butene, isobutene, and 1,3-butadiene. Examples of alcohols include methanol and ethanol. Examples of ether includes dimethyl ether. Note that an example composition of synthesis gas for synthesizing methanol is H₂: CO = 2:1. An example composition of synthesis gas for synthesizing ethanol is H₂ : CO = 3:1. An example composition of synthesis gas for synthesizing dimethyl ether is H₂ : CO= 1:1 to 2:1.

The at least one H₂O electrolysis apparatus 10 is not limited as long as it can electrolyze water to produce hydrogen. The at least one CO₂ electrolysis apparatus 20 is not limited as long as it can electrolyze carbon dioxide to produce carbon monoxide. The co-electrolysis apparatus 30 is not limited as long as it can co-electrolyze water and carbon dioxide to produce hydrogen and carbon monoxide. For example, the at least one H₂O electrolysis apparatus 10 may include an alkaline electrolysis cell, a solid polymer electrolysis cell, and/or an SOFC (solid oxide electrolysis cell).

The at least one H₂O electrolysis apparatus 10 may include an SOFC 50 illustrated in FIG. 2. The at least one CO₂ electrolysis apparatus 20 may include the SOFC 50. The co-electrolysis apparatus 30 may include the SOFC 50. The at least one H₂O electrolysis apparatus 10, the at least one CO₂ electrolysis apparatus 20, and the co-electrolysis apparatus 30 may each include the SOFC 50. The at least one H₂O electrolysis apparatus 10, the at least one CO₂ electrolysis apparatus 20, and the co-electrolysis apparatus 30 may each include a single SOFC 50 or may include a cell stack in which multiple SOFCs 50 are stacked.

The SOFC 50 includes an electrolyte layer 51, a hydrogen electrode 52 provided on one surface of the electrolyte layer 51, and an oxygen electrode 53 provided on the other surface of the electrolyte layer 51. A hydrogen electrode-side passage 54 is arranged on the side of the hydrogen electrode 52 opposite to the side adjacent to the electrolyte layer 51, and a hydrogen electrode-side passage inlet 55 and a hydrogen electrode-side passage outlet 56 are provided in the hydrogen electrode-side passage 54. An oxygen electrode-side passage 57 is arranged on the side of the oxygen electrode 53 opposite to the side adjacent to the electrolyte layer 51, and an oxygen electrode-side passage inlet 58 and an oxygen electrode-side passage outlet 59 are provided in the oxygen electrode-side passage 57. A voltage application part 60 is electrically connected to the hydrogen electrode 52 and the oxygen electrode 53, which applies a voltage between the hydrogen electrode 52 and the oxygen electrode 53.

The electrolyte layer 51 includes a solid oxide having oxide ion conductivity, such as YSZ (yttria-stabilized zirconia). The hydrogen electrode 52 includes at least one of Ni and Ni compound, such as NiO. The oxygen electrode 53 includes an oxide exhibiting electron conductivity, such as LSM((La, Sr)MnO₃), LSC((La, Sr)CoO₃), or LSCF((La, Sr)(Co, Fe)O₃). These materials may be the same in each electrolysis apparatus, and may be selectively used to be an optimum material according to the desired product.

In the H₂O electrolysis apparatus 10, water (water vapor) is supplied to the hydrogen electrode-side passage 54 from the hydrogen electrode-side passage inlet 55, and hydrogen is produced from the water vapor at the hydrogen electrode 52. The produced hydrogen is discharged from the hydrogen electrode-side passage outlet 56. Oxygen ions generated at the hydrogen electrode 52 transfer to the oxygen electrode 53 through the electrolyte layer 51, and oxygen is produced at the oxygen electrode 53. Sweep gas is supplied from the oxygen electrode-side passage inlet 58 to the oxygen electrode-side passage 57. Oxygen produced at the oxygen electrode 53 is discharged from the oxygen electrode-side passage outlet 59 together with the sweep gas.

In the CO₂ electrolysis apparatus 20, carbon dioxide is supplied from the hydrogen electrode-side passage inlet 55 to the hydrogen electrode-side passage 54, and carbon monoxide is produced from carbon dioxide at the hydrogen electrode 52. The produced carbon monoxide is discharged from the hydrogen electrode-side passage outlet 56. Oxygen ions generated at the hydrogen electrode 52 transfer to the oxygen electrode 53 through the electrolyte layer 51, and oxygen is produced at the oxygen electrode 53. Sweep gas is supplied from the oxygen electrode-side passage inlet 58 to the oxygen electrode-side passage 57. Oxygen produced at the oxygen electrode 53 is discharged from the oxygen electrode-side passage outlet 59 together with the sweep gas.

In the co-electrolysis apparatus 30, water vapor and carbon dioxide are supplied from the hydrogen electrode-side passage inlet 55 to the hydrogen electrode-side passage 54, and hydrogen and carbon monoxide are respectively produced from the water vapor and carbon dioxide at the hydrogen electrode 52. The produced hydrogen and carbon monoxide are discharged from the hydrogen electrode-side passage outlet 56. Oxygen ions generated at the hydrogen electrode 52 transfer to the oxygen electrode 53 through the electrolyte layer 51, and oxygen is produced at the oxygen electrode 53. Sweep gas is supplied from the oxygen electrode-side passage inlet 58 to the oxygen electrode-side passage 57. Oxygen generated at the oxygen electrode 53 is discharged from the oxygen electrode-side passage outlet 59 together with the sweep gas.

### [Electrolysis method]

Next, an electrolysis method according to the present embodiment is described. The electrolysis method includes an H₂O electrolysis step, a CO₂ electrolysis step, and a co-electrolysis step. In the H₂O electrolysis step, the H₂O electrolysis apparatus 10 electrolyzes water to produce hydrogen as described above.

In the CO₂ electrolysis step, the CO₂ electrolysis apparatus 20 electrolyzes carbon dioxide to produce carbon monoxide as described above. In the co-electrolysis step, the co-electrolysis apparatus 30 co-electrolyzes water and carbon dioxide to produce less hydrogen per unit time than produced in the H₂O electrolysis step and less carbon monoxide per unit time than produced in the CO₂ electrolysis step, as described above.

Next, the action and effect of the electrolysis system 1 and the electrolysis method according to the present embodiment are described.

The electrolysis system 1 includes the at least one H₂O electrolysis apparatus 10 that electrolyzes water to produce hydrogen, and the at least one CO₂ electrolysis apparatus 20 that electrolyzes carbon dioxide to produce carbon monoxide. The electrolysis system 1 includes the co-electrolysis apparatus 30 that co-electrolyzes water and carbon dioxide. The co-electrolysis apparatus 30 produces less hydrogen per unit time than produced by the at least one H₂O electrolysis apparatus 10 and less carbon monoxide per unit time than produced by the at least one CO₂ electrolysis apparatus 20.

The electrolysis method includes the H₂O electrolysis step of electrolyzing water to produce hydrogen, and the CO₂ electrolysis steps of electrolyzing carbon dioxide to produce carbon monoxide. The electrolysis method includes the co-electrolysis step of co-electrolyzing water and carbon dioxide to produce less hydrogen per unit time than produced in the H₂O electrolysis step and less carbon monoxide per unit time than produced in the CO₂ electrolysis step.

The H₂O electrolysis apparatus 10 mainly electrolyzes water. Similarly, the CO₂ electrolysis apparatus 20 mainly electrolyzes carbon dioxide. That is, the H₂O electrolysis apparatus 10 and the CO₂ electrolysis apparatus 20 each electrolyze a single raw material. Thus, in the H₂O electrolysis apparatus 10 and the CO₂ electrolysis apparatus 20, it is easy to optimize the operating conditions such as a feed flow of a raw material and an electrolytic voltage, and an electrolytic product can be obtained with high efficiency through setting an optimum electrolytic voltage, such as a thermoneutral potential.

However, the optimum production amount per unit time of a general H₂O electrolysis apparatus and a general CO₂ electrolysis apparatus is roughly determined depending on the size of the apparatus. Thus, if the amount of each product is adjusted by increasing or decreasing the number of operating H₂O electrolysis apparatuses 10 and CO₂ electrolysis apparatuses 20, the amount of each product may become too large or too small relative to the amount of target products. Thus, the ratio of synthesis gas is usually adjusted by a shift reaction (CO + H₂O → CO₂ + H₂) to obtain a desired mixture ratio of hydrogen and carbon monoxide contained in the synthesis gas.

In contrast, if water and carbon dioxide are co-electrolyzed by the co-electrolysis apparatus 30, synthesis gas containing hydrogen and carbon monoxide can be produced by the co-electrolysis apparatus 30 alone. Thus, the mixture ratio of hydrogen and carbon monoxide can be adjusted by controlling the operating conditions of the co-electrolysis apparatus 30. If the mixture ratio of the synthesis gas can be adjusted by the co-electrolysis apparatus 30 alone, synthesis gas having a desired ratio may be obtained without equipment for a shift reaction.

However, when water and carbon dioxide are co-electrolyzed, the ratio of production amounts of hydrogen and carbon monoxide may not agree with the ratio of supply flows of water and carbon dioxide according to theory. Since the optimum electrolysis voltage of water alone and the optimum electrolysis voltage of carbon dioxide alone are different, the optimum electrolysis voltage of the co-electrolysis may vary according to the supply flow of water, the supply flow of carbon dioxide, and their ratios. For these reasons, when water and carbon dioxide are co-electrolyzed, it is necessary to set the operating conditions of the co-electrolysis apparatus 30 in consideration of multiple factors in comparison with when water alone or carbon dioxide alone is electrolyzed.

Thus, the electrolysis system 1 according to the present embodiment includes the H₂O electrolysis apparatus 10, the CO₂ electrolysis apparatus 20, and the co-electrolysis apparatus 30. The electrolysis system 1 makes it possible to produce hydrogen and carbon monoxide under optimum conditions by producing most of the hydrogen in the H₂O electrolysis apparatus 10 and most of the carbon monoxide in the CO₂ electrolysis apparatus 20. For example, the H₂O electrolysis apparatus 10 is operated at an optimum electrolysis voltage in the vicinity of a thermoneutral potential in the electrolysis reaction of water, and the CO₂ electrolysis apparatus 20 is operated at an optimum electrolysis voltage in the vicinity of a thermoneutral potential in the electrolysis reaction of carbon dioxide. Thus, it is possible to efficiently obtain the target hydrogen and carbon monoxide in the electrolysis system 1 as a whole. It is possible to produce synthesis gas having a target ratio by producing hydrogen and carbon monoxide by using the co-electrolysis apparatus 30 to supplement a shortage thereof and achieve the target ratio.

As described above, although the co-electrolysis apparatus 30 itself is less efficient in producing hydrogen or carbon monoxide than the H₂O electrolysis apparatus 10 and the CO₂ electrolysis apparatus 20, most of the hydrogen can be produced by the H₂O electrolysis apparatus 10 and most of the carbon monoxide can be produced by the CO₂ electrolysis apparatus 20. Thus, the amount of hydrogen produced in the H₂O electrolysis apparatus 10 and the amount of carbon monoxide produced in the CO₂ electrolysis apparatus 20 are determined, and then the amount of hydrogen and carbon monoxide produced in the co-electrolysis apparatus 30 can be fine-tuned according to these amounts. It is possible for the co-electrolysis apparatus 30 to compensate the shortage by changing supply flows of water and carbon dioxide, the electrolysis voltage, and the like. This provides synthesis gas of a desired ratio.

Thus, the electrolysis system 1 and the electrolysis method according to the present embodiment make it possible to easily produce synthesis gas having a desired composition. In the electrolysis system 1 and the electrolysis method according to the present embodiment, the electrolysis system 1 as a whole can prevent the lowering of the electrolysis efficiency and can also achieve the operation with high energy efficiency.

The at least one H₂O electrolysis apparatus 10 may be arranged in parallel with the at least one CO₂ electrolysis apparatus 20. The at least one H₂O electrolysis apparatus 10 may be arranged in parallel with the co-electrolysis apparatus 30. The at least one CO₂ electrolysis apparatus 20 may be arranged in parallel with the co-electrolysis apparatus 30. Thus, it is possible to easily obtain target synthesis gas by mixing hydrogen and carbon monoxide produced in the H₂O electrolysis apparatus 10, the CO₂ electrolysis apparatus 20, and the co-electrolysis apparatus 30.

The at least one H₂O electrolysis apparatus 10 may include a plurality of H₂O electrolysis apparatuses arranged in parallel. The amount of hydrogen per unit time produced by each of the plurality of H₂O electrolysis apparatuses may be greater than the amount of hydrogen per unit time produced by the co-electrolysis apparatus 30. Thus, by increasing or decreasing the number of operating H₂O electrolysis apparatuses 10, it is possible to increase or decrease the amount of hydrogen produced by the electrolysis system 1 as a whole. The H₂O electrolysis apparatus 10 mainly produces hydrogen and the CO₂ electrolysis apparatus 20 mainly produces carbon monoxide, and thus it is possible for the co-electrolysis apparatus 30 to produce a shortage of hydrogen and carbon monoxide through fine-tuning.

The at least one CO₂ electrolysis apparatus 20 may include a plurality of CO₂ electrolysis apparatuses arranged in parallel. The amount of carbon monoxide per unit time produced by each of the plurality of CO₂ electrolysis apparatuses 20 may be greater than the amount of carbon monoxide per unit time produced by the co-electrolysis apparatus 30. Thus, by increasing or decreasing the number of operating CO₂ electrolysis apparatuses 20, it is possible to increase or decrease the amount of carbon monoxide produced by the electrolysis system 1 as a whole. The H₂O electrolysis apparatus 10 mainly produces hydrogen and the CO₂ electrolysis apparatus 20 mainly produces carbon monoxide, and thus it is possible for the co-electrolysis apparatus 30 to produce a shortage of hydrogen and carbon monoxide through fine tuning.

The at least one H₂O electrolysis apparatus 10, the at least one CO₂ electrolysis apparatus 20, and the co-electrolysis apparatus 30 may each include the SOFC (solid oxide electrolysis cell) 50. Since these electrolysis apparatuses each include the SOFC 50, it is possible to perform electrolysis at a high temperature, such as 400 °C or higher, and form a highly efficient system.

The present disclosure contributes, for example, to Goal 7 of the United Nations-led Sustainable Development Goals (SDGs): "Ensure access to affordable, reliable and sustainable modern energy for all."

The entire contents of Japanese Patent Application No. 2020-080918 (filed on May 1, 2020) are incorporated herein by reference.

Although some embodiments have been described herein, other variations and modifications of the embodiments are possible based on the above disclosure. All of the components of the above-described embodiments and all of the features described in the claims may be individually extracted and combined as long as they do not contradict each other.

### REFERENCE SIGNS LIST

- 1: Electrolysis system
- 10: H₂O electrolysis apparatus
- 20: CO₂ electrolysis apparatus
- 30: Co-electrolysis apparatus
- 50: SOFC

## Claims

1. An electrolysis system comprising:
at least one H₂O electrolysis apparatus that electrolyzes water to produce hydrogen;
at least one CO₂ electrolysis apparatus that electrolyzes carbon dioxide to produce carbon monoxide; and
a co-electrolysis apparatus that co-electrolyzes water and carbon dioxide to produce less hydrogen per unit time than produced by the at least one H₂O electrolysis apparatus and less carbon monoxide per unit time than produced by the at least one CO₂ electrolysis apparatus.

2. The electrolysis system according to claim 1, wherein
the at least one H₂O electrolysis apparatus is arranged in parallel with the at least one CO₂ electrolysis apparatus, the at least one H₂O electrolysis apparatus is arranged in parallel with the co-electrolysis apparatus, and the at least one CO₂ electrolysis apparatus is arranged in parallel with the co-electrolysis apparatus.

3. The electrolysis system according to claim 1 or 2, wherein
the at least one H₂O electrolysis apparatus comprises a plurality of H₂O electrolysis apparatuses arranged in parallel, and an amount of hydrogen per unit time produced by each of the plurality of H₂O electrolysis apparatuses is greater than an amount of hydrogen per unit time produced by the co-electrolysis apparatus.

4. The electrolysis system according to any one of claims 1 to 3, wherein
the at least one CO₂ electrolysis apparatus comprises a plurality of CO₂ electrolysis apparatuses arranged in parallel, and an amount of carbon monoxide per unit time produced by each of the plurality of CO₂ electrolysis apparatuses is greater than an amount of carbon monoxide per unit time produced by the co-electrolysis apparatus.

5. The electrolysis system according to any one of claims 1 to 4, wherein
the at least one H₂O electrolysis apparatus, the at least one CO₂ electrolysis apparatus, and the co-electrolysis apparatus each include a solid oxide electrolysis cell.

6. An electrolysis method comprising:
an H₂O electrolysis step of electrolyzing water to produce hydrogen;
a CO₂ electrolysis step of electrolyzing carbon dioxide to produce carbon monoxide; and
a co-electrolysis step of co-electrolyzing water and carbon dioxide to produce less hydrogen per unit time than produced in the H₂O electrolysis step and less carbon monoxide per unit time than produced in the CO₂ electrolysis step.
